(19) Europäisches Patentamt / European Patent Office / Office européen des brevets

(11) **EP 4 462 213 A1**

(12) **EUROPEAN PATENT APPLICATION**
published in accordance with Art. 153(4) EPC

(43) Date of publication:
**13.11.2024 Bulletin 2024/46**

(21) Application number: **23780272.3**

(22) Date of filing: **24.03.2023**

(51) International Patent Classification (IPC):
**G05B 23/02** (2006.01)　　**C21B 5/00** (2006.01)

(52) Cooperative Patent Classification (CPC):
**C21B 5/00; G05B 23/02**

(86) International application number:
**PCT/JP2023/012039**

(87) International publication number:
**WO 2023/190262 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 JP 2022052019**

(71) Applicant: **JFE Steel Corporation**
**Tokyo 100-0011 (JP)**

(72) Inventors:
• **OGAWA Naotaka**
**Tokyo 100-0011 (JP)**
• **MIYAZAKI Aoto**
**Tokyo 100-0011 (JP)**

(74) Representative: **Grünecker Patent- und Rechtsanwälte**
**PartG mbB**
**Leopoldstraße 4**
**80802 München (DE)**

(54) **IRONWORKS OPERATION ASSISTANCE METHOD, OPERATION ASSISTANCE DEVICE, DISPLAY DEVICE, AND OPERATION ASSISTANCE PROGRAM**

(57) Technology to support operation at a steelworks is improved. An operation support method that is used at a steelworks including a blast furnace sector and an energy sector and that is to be executed by an information processing device, the operation support method including: inputting data on blast furnace operational specifications that affect the energy sector into a learning model pertaining to the steelworks; estimating a total cost of the blast furnace sector and the energy sector by the learning model, based on the input data on blast furnace operational specifications; and outputting the estimated total cost, wherein the learning model is a model trained based on track record data including track records of blast furnace operational specifications and total costs.

*FIG. 2*

```
        ┌─────────┐
        │  Start  │
        └─────────┘
             │
┌────────────────────────────────────────┐
│ Train learning model based on track     │～S100
│ record data                             │
└────────────────────────────────────────┘
             │
┌────────────────────────────────────────┐
│ Determine blast furnace operational     │～S110
│ specifications based on preconditions   │
└────────────────────────────────────────┘
             │
┌────────────────────────────────────────┐
│ Input data on blast furnace operational │～S120
│ specifications into learning model      │
└────────────────────────────────────────┘
             │
┌────────────────────────────────────────┐
│ Estimate total cost of                  │～S130
│ blast furnace sector and energy sector  │
└────────────────────────────────────────┘
             │
┌────────────────────────────────────────┐
│ Output estimated total cost             │～S140
└────────────────────────────────────────┘
             │
        ┌─────────┐
        │   End   │
        └─────────┘
```

EP 4 462 213 A1

**Description**

CROSS-REFERENCE TO RELATED APPLICATION

The present disclosure relates to an operation support method of supporting operation at a steelworks, an operation support device, a display device, and an operation support program. The present application claims priority based on the Japanese Patent Application No. 2022-052019, filed on March 28, 2022, the contents of which are incorporated herein by reference.

BACKGROUND

Technology to support operation at a steelworks has been known. For example, Patent Literature (PTL) 1 describes a method of determining conditions that minimize cost, by performing optimization processing using the total cost at a steelworks as an objective function and also using operation conditions, such as crude steel production, hot metal blending ratio, and type and amount of raw materials used, as variables in a calculation model.

CITATION LIST

Patent Literature

PTL 1: JP 2005-055997 A

SUMMARY

(Technical Problem)

In actual operation, mass and heat balance of a blast furnace, power plant efficiency, or the like often deviate from theoretical values derived by the calculation model. For this reason, the calculation model needs to be tuned on a case-by-case basis using most recent track records or the like. However, genetic algorithm processing, which is used as an optimization processing method in PTL 1, makes such tuning difficult. Thus, the conventional technology searches for optimization conditions based on theoretical values, and there has been a risk that an optimal solution that fits actual operation cannot be obtained. Thus, there has been room for improvement in technology to support operation at a steelworks.
It would be helpful to improve technology to support operation at a steelworks.

(Solution to Problem)

An operation support method according to an embodiment of the present disclosure is
an operation support method that is used at a steelworks including a blast furnace sector and an energy sector and that is to be executed by an information processing device, the operation support method including:

inputting data on blast furnace operational specifications that affect the energy sector into a learning model pertaining to the steelworks;
estimating a total cost of the blast furnace sector and the energy sector by the learning model, based on the input data on blast furnace operational specifications; and
outputting the estimated total cost, wherein
the learning model is a model trained based on track record data including track records of blast furnace operational specifications and total costs.

An operation support device according to an embodiment of the present disclosure is

an operation support device at a steelworks including a blast furnace sector and an energy sector that includes a controller, wherein
the controller is configured to:

input data on blast furnace operational specifications that affect the energy sector into a learning model pertaining to the steelworks;
estimate a total cost of the blast furnace sector and the energy sector by the learning model, based on the input data on blast furnace operational specifications; and
output the estimated total cost, wherein
the learning model is a model trained using track record data including track records of blast furnace operational specifications and total costs as teacher data.

A display device according to an embodiment of the present disclosure is

a display device at a steelworks including a blast furnace sector and an energy sector that displays an output from an operation support device including a controller, the display device being configured to
display a total cost of the blast furnace sector and the energy sector that has been estimated by the controller included in the operation support device by a learning model pertaining to the steelworks, based on data on blast furnace operational specifications that affect the energy sector, wherein
the learning model is a model trained using track record data including track records of blast furnace operational specifications and total costs as teacher data.

An operation support program according to an embodiment of the present disclosure is
an operation support program at a steelworks including a blast furnace sector and an energy sector that is to be executed by an information processing device, the operation support program being configured to cause a computer to:

input data on blast furnace operational specifications that affect the energy sector into a learning model pertaining to the steelworks;
estimate a total cost of the blast furnace sector and the energy sector by the learning model, based on the input data on blast furnace operational specifications; and
output the estimated total cost, wherein
the learning model is a model trained using track record data including track records of blast furnace operational specifications and total costs as teacher data.

(Advantageous Effect)

According to an embodiment of the present disclosure, technology to support operation at a steelworks can be improved.

BRIEF DESCRIPTION OF THE DRAWINGS

In the accompanying drawings:

FIG. 1 is a block diagram illustrating a schematic configuration of an operation support device according to an embodiment of the present disclosure;
FIG. 2 is a flowchart illustrating operations of the operation support device according to an embodiment of the present disclosure;
FIG. 3 illustrates a configuration of a learning model according to an embodiment of the present disclosure;
FIG. 4 is a flowchart illustrating operations of the operation support device according to an embodiment of the present disclosure;
FIG. 5 illustrates case study results of operation with six different operation conditions; and
FIG. 6 illustrates case study results for different preconditions.

DETAILED DESCRIPTION

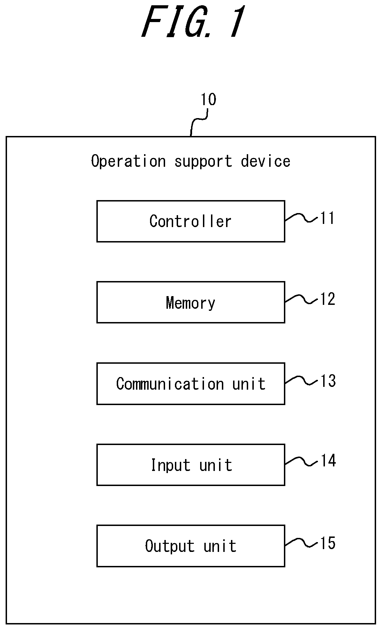

In the following, operational support technology at a steelworks according to an embodiment of the present disclosure will be described with reference to the drawings.
In the figures, the same or corresponding portions are denoted with the same reference numerals. In the description of the present embodiment, description of the same or corresponding portions will be omitted or simplified as appropriate.
With reference to FIG. 1, an overview and configuration of the operation support technology at a steelworks according to the present embodiment will be described. The operation support technology at a steelworks according to the present embodiment is to be executed by an information processing device 10 (hereinafter also referred to as an operation support device 10). Such a support method is used at a steelworks including a blast furnace sector and an energy sector.

First, the overview of the present embodiment will be described, and details thereof will be described later. Generally, at a steelworks, a production plan that includes tapping amount of steel, production, coke production, and the like is prepared based on demand for steel products. Such a production plans is prepared for each plant for the purpose of continuing production activities without excesses or deficiencies. In the energy sector, which manages overall energy, a supply and demand plan is prepared so as to ensure that each plant is supplied with utilities it needs without shortages. Here, the utilities include gas, electricity, steam, water, compressed air, and the like. In preparing operation plans, the respective sectors, including the energy sector, manage costs not only to realize the production plans, but also to minimize production costs. Specifically, under conditions that satisfy the production plans, the operation plans are prepared so as to minimize production costs by optimizing a wide variety of operation conditions, such as types and amounts of raw materials and utilities used, or operation conditions of lines. At the steelworks, combustible gases (B gas, C gas, and LD gas) by-produced in a blast furnace, a coke oven, and a converter are used directly or as a mixed gas (M gas) within the steelworks, and any surplus is used in a non-utility power generation line managed by the energy sector. In the non-utility power generation line, steam is generated by heat exchange between combustion exhaust gas generated by combustion of the by-product gases and partially purchased fuel and pure water or the like, and it is used for power generation in a steam turbine. In this process, a necessary amount of steam for the steelworks is also extracted (steam extraction processing). Given the above, the supply and demand management of the respective utilities managed by the energy sector, especially that of gas, electricity, and steam, is deeply related not only to conditions of energy equipment, such as a turbine, but also to operation conditions managed by each plant, especially conditions of generation of by-product gases. However, supply and demand plans for gas, electricity, and steam are generally prepared based on detailed operation plans for the respective plants, and it is difficult to say that the cost status in the energy sector is adequately taken into account in the operation plans. Therefore, a result of summing up optimal costs for the respective sectors does not necessarily coincide with an optimal cost for the entire steelworks. Accordingly, an objective of the operation support technology at a steelworks according to the present embodiment is to provide a blast furnace and comprehensive energy simulation technology by which more accurate cost control can be achieved.

In operating the blast furnace, operation conditions are first determined using a model constructed from data on mass balance and heat balance. However, in actual operation, there is a deviation between theoretical values calculated from the model and actual data obtained from the actual operation, due to ever-changing conditions of the blast furnace or an influence of changes in the surrounding environment. In the present embodiment, machine learning is performed based on data on actual operation, and the model is corrected in order to prevent such a deviation.

Specifically, in the operation support technology at a steelworks according to the present embodiment, the operation support device 10 uses a physical model (hereinafter also referred to as a learning model) pertaining to the steelworks that performs estimation processing necessary for operation support at the steelworks. The learning model is a learning model that uses data on blast furnace operational specifications as inputs and a cost (hereinafter referred to as a total cost) of the blast furnace sector and the energy sector as an output. Such a learning model is trained using track record data including track records of blast furnace operational parameters and total costs as teacher data. Here, the operation support device 10 in the present embodiment inputs, into the learning model, data on blast furnace operational parameters that affect the energy sector. The operation support device 10 also estimates a total cost using the learning model, based on the input data on blast furnace operational specifications. The operation support device 10 also outputs the estimated total cost.

Thus, according to the present embodiment, the operation support device 10 inputs data on blast furnace operational specifications that affect the energy sector into the learning model and outputs a total cost. The learning model is also trained using track record data as teacher data. That is, in the present embodiment, a feedback function using track record data is exerted so as to correct the deviation between actual operation and theoretical values derived from the model. The present embodiment thus improves the accuracy of estimating the total cost at the steelworks. In other words, according to the present embodiment, a blast furnace and integrated energy simulation technology that enables more accurate cost control can be provided, and technology to support operation at the steelworks can be improved.

Here, data on blast furnace operational specifications that affect the energy sector include, for example, reducing agent conditions and blast conditions. There is a wide variety of operation conditions that affect the total cost of the blast furnace sector and the energy sector. For example, in the blast furnace, reducing agent conditions, such as coke rate or pulverized coal rate, which are closely related to B gas generation conditions, and blast conditions, such as blast moisture, blast temperature, or blast oxygen concentration, also significantly affect the total cost. In the present embodiment, more accurate cost control and more feasible operation plan preparation are realized, by considering such reducing agent conditions and blast conditions as variables.

Next, components of the operation support device 10 will be described in detail.

The operation support device 10 is any device used by a user (for example, a manager or a person in charge at a steelworks). For example, a general-purpose electronic device or a specialized electronic device can be employed as the operation support device 10. As illustrated in FIG. 1, the operation support device 10 includes a controller 11, a memory 12, a communication unit 13, an input unit 14, and an output unit 15.

The controller 11 includes at least one processor, at least one dedicated circuit, or a combination of these. The processor is a general purpose processor, such as a Central Processing Unit (CPU) or a Graphics Processing Unit (GPU), or a dedicated processor that is dedicated to specific processing. The dedicated circuit is, for example, a Field-Programmable Gate Array (FPGA) or an Application Specific Integrated Circuit (ASIC). The controller 11 executes processing related to operations of the operation support device 10, while controlling the components of the operation support device 10.

The memory 12 includes at least one semiconductor memory, at least one magnetic memory, at least one optical memory, or a combination of at least two of these. The semiconductor memory is, for example, Random Access Memory (RAM) or Read Only Memory (ROM). The RAM is, for example, Static Random Access Memory (SRAM) or Dynamic Random Access Memory (DRAM). The ROM is, for example, Electrically Erasable Programmable Read Only Memory (EEPROM). The memory 12 functions, for example, as a main memory, an auxiliary memory, or a cache memory. The memory 12 stores data to be used for operations of the operation support device 10 and data obtained by the operations of the operation support device 10. For example, the memory 12 stores a learning model. The learning model may be stored in an external device different from the operation support device 10. In this case, the operation support device 10 uses the learning model, by accessing the external device that stores the learning model via the communication unit 13.

The communication unit 13 includes at least one interface for external communication. The communication interface may be either a wired communication interface or a wireless communication interface. In a case of wired communication, the communication interface is, for example, a Local Area Network (LAN) interface or a Universal Serial Bus (USB). In a case of wireless communication, the communication interface is, for example, an interface compliant with a mobile communication standard, such as Long Term Evolution (LTE), the 4th Generation (4G), or the 5th Generation (5G), or a short distance wireless communication interface, such as Bluetooth° (Bluetooth is a registered trademark in Japan, other countries, or both). The communication unit 13 receives data to be used for operations of the operation support device 10 and transmits data obtained by the operations of the operation support device 10.

The input unit 14 includes at least one input interface. The input interface includes, for example, physical keys, capacitive keys, a pointing device, and a touch screen integrally provided with a display. The input interface may be, for example, a microphone that accepts voice input, a camera that accepts gesture input, or the like. The input unit 14 receives an operation of inputting data used for operations of the operation support device 10. The input unit 14 may be connected to the operation support device 10 as an external input device, instead of being included in the operation support device 10. For example, any method, such as Universal Serial Bus (USB), High-Definition Multimedia Interface (HDMI®)(HDMI is a registered trademark in Japan, other countries, or both), or Bluetooth, can be used as the connection method.

The output unit 15 includes at least one output interface. The output interface is, for example, a display that outputs video information, a speaker that outputs audio information, or the like. The display is, for example, a Liquid Crystal Display (LCD), or an Electro-Luminescent (EL) display. The output unit 15 displays and outputs data obtained from operations of the operation support device 10. The output unit 15 may be connected to the operation support device 10 as an external output device, instead of being included in the operation support device 10. For example, any method, such as USB, HDMI, or Bluetooth, can be used as the connection method.

The functions of the operation support device 10 are realized by executing a program according to the present embodiment by a processor corresponding to the operation support device 10. That is, the functions of the operation support device 10 are realized by software. The program enables a computer to function as the operation support device 10, by causing the computer to execute operations of the operation support device 10. That is, the computer functions as the operation support device 10, by executing the operations of the operation support device 10 in accordance with the program.

In the present disclosure, a program can be recorded on a computer readable recording medium. The computer readable recording medium includes a non-transitory computer readable medium, such as a magnetic recording device, an optical disc, a magneto-optical recording medium, or a semiconductor memory. The program is distributed, for example, by selling, transferring, or renting a portable recording medium, such as a Digital Versatile Disc (DVD) or a Compact Disc Read Only Memory (CD-ROM), on which the program is recorded. The program can also be distributed, by storing it in a storage of an external server and transmitting it from the external server to another computer. The program may also be provided as a program product.

Some or all of the functions of operation support device 10 may be implemented by a dedicated circuit corresponding to the controller 11. That is, some or all of the functions of the operation support device 10 may be realized by hardware.

(Operation Example 1 of Operation Support Device 10)

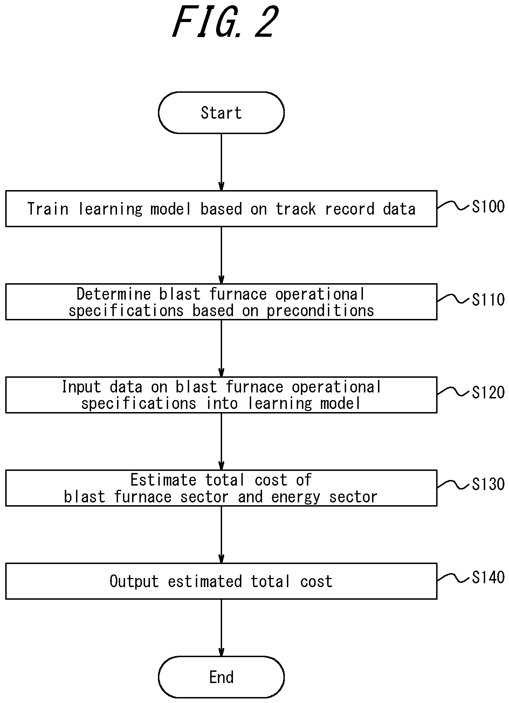

Next, an operation example 1 of the operation support device 10 according to the present embodiment will be described. FIG. 2 is a flowchart illustrating an example of an operation support method executed by the operation support device 10 according to the present embodiment.

Step S100: The controller 11 of the operation support device 10 trains a learning model based on track record data. Specifically, the controller 11 trains the learning model using track record data including track records of blast furnace operational specifications and total costs as teacher data. As mentioned above, a deviation may occur between theoretical values calculated from a physical model and actual data obtained from actual operation. In the present embodiment, the learning model is trained based on data from actual operation in order to prevent such a deviation.

In the present embodiment, blast furnace operational specifications include reducing agent specifications and blast specifications. The reducing agent specifications include coke rate and pulverized coal rate. The reducing agent specifications may also include composition and carbon content pertaining to coke. The blast specifications include blast moisture, blast temperature, and blast oxygen concentration. All of these blast furnace operational specifications significantly affect the energy sector. In other words, these blast furnace operational specifications significantly affect cost control in the energy sector, that is, a cost of the energy sector. The present embodiment therefore employs a learning model that uses the blast furnace operational specifications that affect the energy sector as inputs. By employing such a learning model, the present embodiment improves the accuracy of estimating a total cost at the steelworks. The following description assumes that the blast furnace operational specifications include coke rate, pulverized coal rate, blast moisture, blast temperature, and blast oxygen concentration in the present embodiment.

The total cost includes an energy cost of the blast furnace sector and a main cost of the energy sector. The energy cost in the blast furnace sector includes a reducing agent-related cost and a utility cost. The utility cost is a utility cost necessary for the respective plants or the like. The main cost of the energy sector includes a purchased fuel cost and an electricity buying and selling cost. In the present embodiment, the total cost is determined by the following formula (1).

[Math. 1]

$$\begin{aligned} \text{Total cost} \\ = \text{energy cost of blast furnace sector} + \text{main cost of energy sector} \\ = (\text{reducing agent-related cost} + \text{utility cost}) + (\text{purchased fuel cost} + \\ \text{electricity buying and selling cost}) \cdots\cdots (1) \end{aligned}$$

Examples of the learning model may include, but is not limited to, a machine learning model generated based on a multilayer perceptron composed of an input layer, a hidden layer, and an output layer. The learning model may be any model generated based on a machine learning algorithm, such as Convolutional Neural Network (CNN), Recurrent Neural Network (RNN), or another deep learning model. Furthermore, the learning model is not limited to a model generated by machine learning. For example, the learning model may be a multiple regression model, a model based on the Kalman filter, or the like. For example, the learning model may be a theoretical model constructed from data on mass balance and heat balance. Additionally, the term "training" in the present embodiment includes, but is not limited to, training in a machine learning algorithm. The "training" in the present embodiment includes optimization processing or correction processing for various parameters in, for example, a multiple regression model, a theoretical model, or the like.

Step S110: The controller 11 determines blast furnace operational specifications based on conditions (hereinafter also referred to as preconditions) determined in accordance with production plans or the like at the steelworks. The preconditions are set, for example, by user input. Such preconditions include production (or productivity), coke unit cost, a rolling operation plan, coal market conditions, and crude oil market conditions. Specifically, the controller 11 determines the blast furnace operational specifications using, for example, a lookup table that associates production with blast furnace operational specifications. In this case, the memory 12 stores the lookup table. The controller 11 also determines the blast furnace operational specifications corresponding to the preconditions, by referring to the memory 12.

Step S120: The controller 11 inputs data on the blast furnace operational specifications determined in Step S110 into the learning model trained in Step S100.

Step S130: The controller 11 estimates the total cost of the blast furnace sector and the energy sector by the learning model, based on the input data on blast furnace operational specifications. In the estimation processing, the above preconditions are used. Specifically, the learning model estimates the total cost of the blast furnace sector and the energy sector using the rolling operation plan, the coal market conditions, and the crude oil market conditions, based on the input data on blast furnace operational specifications.

Step S140: The controller 11 outputs the total cost estimated in Step S130 through the output unit 15.

Here, although an example in which the learning model outputs the total cost is described above, the present disclosure is not limited to this. The learning model may further estimate carbon dioxide emissions of the blast furnace sector and the energy sector, based on the input data on the blast furnace operational specifications. The carbon dioxide emissions include carbon dioxide emissions derived from a reducing agent, carbon dioxide emissions derived from purchased fuel, and carbon dioxide emissions derived from purchased electricity. Additionally, carbon dioxide emissions derived from sold electricity are subtracted from the carbon dioxide emissions. That is, the carbon dioxide emissions are determined, for example, by the following formula (2).

[Math. 2]

$$\text{Carbon dioxide emissions} = \text{carbon dioxide emissions derived from reducing agent} + \text{carbon dioxide emissions from purchased fuel} + \text{carbon dioxide emissions from purchased electricity} - \text{carbon dioxide emissions from sold electricity} \qquad (2)$$

In a case in which carbon dioxide emissions are estimated, the track record data in Step S100 includes track records of carbon dioxide emissions. That is, in Step S100, the controller 11 trains the learning model using track record data including track records of blast furnace operational specifications, total costs, and carbon dioxide emissions as teacher data. Furthermore, in Step S130, the controller 11 estimates the total cost of the blast furnace sector and the energy sector and the carbon dioxide emissions by the learning model, based on the input data on blast furnace operational specifications. Moreover, in step S140, the controller 11 outputs the total cost and the carbon dioxide emissions estimated.

The total cost may also include a cost equivalent to carbon dioxide emissions. The cost equivalent to carbon dioxide emissions is determined by the carbon dioxide emissions and a unit cost of carbon dioxide. In this case, the above preconditions include the unit cost of carbon dioxide. Hereafter, the total cost including the cost equivalent to the carbon dioxide emissions is also referred to as the total cost including carbon assessment. The total cost including carbon assessment is determined, for example, by the following formula (3).

[Math. 3]

$$\text{Total cost including carbon assessment} = \text{total cost} + \text{carbon dioxide emissions} \times \text{unit cost of carbon dioxide} \qquad (3)$$

Although the learning model is described as one model corresponding to the steelworks including the blast furnace sector and the energy sector, the present disclosure is not limited to this. For example, the learning model may be a combination of two models, that is, a model corresponding to the blast furnace sector (hereinafter also referred to as a blast furnace sector model) and a model corresponding to the energy sector (hereinafter also referred to as an energy sector model). Furthermore, the learning model may be a combination of models into which the blast furnace sector model and the energy sector model are further subdivided.

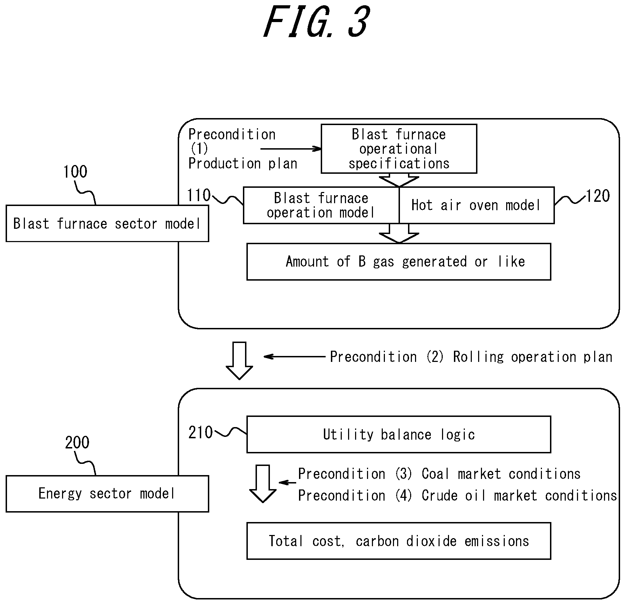

With reference to FIG. 3, an example configuration of the learning model will be described. The learning model of FIG. 3 includes a blast furnace sector model 100 and an energy sector model 200. The blast furnace sector model 100 includes a blast furnace operation model 110 and a hot air oven model 120. The blast furnace operation model 110 is a model that is based on mass and heat balance in the blast furnace, and the hot air oven model 120 is a model that is based on mass and heat balance in the hot air oven. The controller 11 trains the blast furnace operation model 110 and the hot air oven model 120 using track record data as teacher data. Blast furnace operational specifications based on preconditions are input into the blast furnace operation model 110 and the hot air oven model 120. Such preconditions include a production plan (such as production). As mentioned above, the controller 11 determines the blast furnace operational specifications to be input into the models, based on the production plan and the lookup table. The blast furnace operation model 110 and the hot air oven model 120 output data necessary to calculate the total cost, based on the input blast furnace operational specifications. Such data are used as inputs in the energy sector model 200. The data necessary to calculate the total cost include, for example, data pertaining to B-gas, a combustible gas that is a byproduct of the blast furnace. The data pertaining to B gas include amount of B gas generated and amount of heat per unit volume of B gas.

The energy sector model 200 includes a utility balance logic 210. The controller 11 trains the utility balance logic 210 using track record data as teacher data. The utility balance logic 210 outputs a total cost and carbon dioxide emissions, based on input preconditions and the data pertaining to B gas. Such preconditions include a rolling operation plan, coal market conditions, and crude oil market conditions. That is, the energy sector model 200 uses the preconditions and the output of the blast furnace sector model 100 as inputs and outputs the total cost and the carbon dioxide emissions.

(Operation Example 2 of Operation Support Device 10)

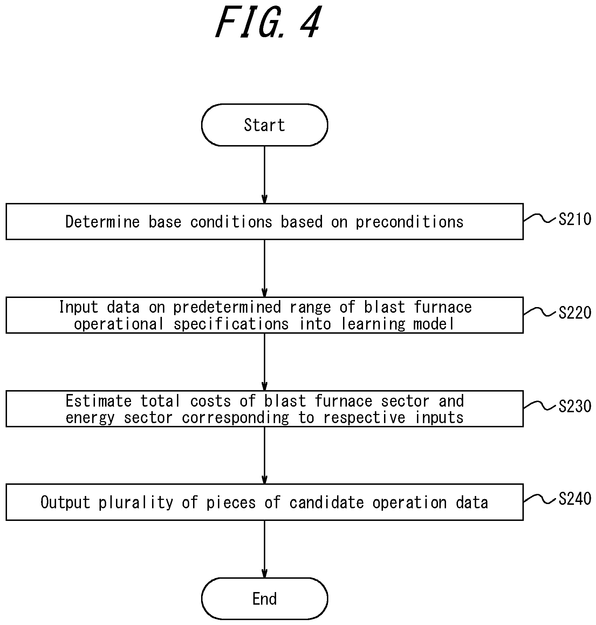

Next, an operation example 2 of the operation support device 10 according to the present embodiment will be described. FIG. 4 is a flowchart illustrating an example of an operation support method executed by the operation support device 10 according to the present embodiment. Here, example operations in which the operation support device 10 outputs a plurality of candidates of operation data (hereinafter also referred to as "candidate operation data") based on a total cost estimated by the learning model will be described. Additionally, the operation support device 10 uses the learning model that has already been trained by the processing in Step S 100 of FIG. 3.

Step S210: The controller 11 of the operation support device 10 determines representative values of blast furnace operational specifications (hereinafter referred to as "base conditions") based on preconditions. Such preconditions are set, for example, by user input. The preconditions include production (or productivity), coke unit cost, a rolling operation plan, coal market conditions, and crude oil market conditions. Specifically, the controller 11 determines the base conditions using, for example, a lookup table that associates production with base conditions. In this case, the memory 12 stores the lookup table. The controller 11 also determines the base conditions corresponding to the preconditions, by referring to the memory 12. The base conditions include coke rate, pulverized coal rate, blast moisture, blast temperature, and blast oxygen concentration. Additionally, at least some of the base conditions may be set by manual input by a user.

Step S220: The controller 11 inputs data on a predetermined range of blast furnace operational specifications into the learning model, based on the base conditions. That is, the controller 11 inputs the data on the predetermined range of blast furnace operational specifications into the learning model using five operation factors included in the base conditions, that is, coke rate, pulverized coal rate, blast moisture, blast temperature, and blast oxygen concentration. The predetermined range is defined for each of the five operation factors. Specifically, the predetermined range of coke rate has a lower limit of 280 kg/t and an upper limit of 450 kg/t. The predetermined range of pulverized coal rate has a lower limit of 80 kg/t and an upper limit of 260 kg/t. The predetermined range of blast moisture has a lower limit of 5 g/Nm$^3$ and an upper limit of 70 g/Nm$^3$. The predetermined range of blast temperature has a lower limit of 900 °C and an upper limit of 1200 °C. The predetermined range of blast oxygen concentration has a lower limit of 0 % and an upper limit of 10 %. These predetermined ranges are determined based on upper limit values and lower limit values of track records in a steady state. The predetermined ranges may also be determined based on equipment management constraints. For example, the predetermined range of blast temperature is determined to the above range, for example, from the viewpoint of maintaining stable functioning of the hot air oven.

The controller 11 also inputs all combinations of operation factors in the predetermined range into the learning model, based on a specified mesh (an increment in a predetermined range) in the predetermined range. For example, the predetermined range of blast temperature is set to 900 °C to 1200 °C. The mesh can also be specified as 50 °C. In a case in which the predetermined range and the mesh are specified in this way, 900 °C, 950 °C, ..., 1200 °C are input into the learning model as blast temperatures. In other words, the controller 11 performs a grid search for the five operation factors, using the predetermined range of each operation factor (for example, the upper limit value and lower limit value that can be set for each operation factor) as the search range. The size of the mesh is determined as appropriate in accordance with computational load for grid search.

Step S230: The controller 11 estimates total costs of the blast furnace sector and the energy sector corresponding to the respective inputs in Step S220 by the learning model.

Step S240: The controller 11 outputs a plurality of pieces of candidate operation data through the output unit 15, based on the total costs estimated in Step S230. In other words, the controller 11 outputs the plurality of pieces of candidate operation data by searching for total costs as objective functions. The plurality of pieces of candidate operation data are, for example, top 20 pieces of operation data in order from the lowest total cost estimated for each input. The operation data include coke rate, pulverized coal rate, blast moisture, blast temperature, and blast oxygen concentration. That is, a user can easily identify the top 20 pieces of operation data with the lowest total costs. The user can also select, from among the operation data, some pieces of operation data that can be realistically used.

Here, although an example in which the learning model outputs the total cost is described above, the present disclosure is not limited to this. The learning model may further estimate carbon dioxide emissions of the blast furnace sector and the energy sector, based on input data on blast furnace operational specifications. The carbon dioxide emissions are expressed by the above formula (2). In this case, in Steps S220 through S240 above, the controller 11 outputs a plurality of pieces of candidate operation data, by searching for total costs and carbon dioxide emissions as objective functions. The candidate operation data in this case include top 20 pieces of operation data based on a ranking determined in accordance with total costs and carbon dioxide emissions estimated for respective inputs. The ranking determined in accordance with the total costs and the carbon dioxide emissions is determined as appropriate according to evaluation values or the like based on the total costs and the carbon dioxide emissions. For example, the learning model may estimate total costs including carbon evaluation. The total costs including carbon evaluation are determined, for example, by the above formula (3). In this case, in Steps S220 through S240 above, the controller 11 outputs a plurality of pieces of candidate operation data by searching for total costs including carbon evaluation as objective functions. The candidate operation data in this case include, for example, top 20 pieces of operation data in order from the lowest total cost including carbon evaluation estimated for each input.

As has been described, according to the present embodiment, the operation support device 10 inputs data on blast furnace operational specifications that affect the energy sector into the learning model and outputs a total cost or the like. Furthermore, the learning model is trained based on track record data. Thus, according to the present embodiment, the accuracy of estimating the total cost or the like at a steelworks can be improved. Moreover, according to the present embodiment, the operation support device 10 inputs data on a predetermined range of blast furnace operational specifications, estimates total costs or the like corresponding to the respective inputs, and outputs a plurality of pieces of candidate operation data. Accordingly, a plurality of pieces of candidate operation data desirable from the viewpoint of total costs or the like can be output from among the data on the predetermined range of blast furnace operational specifications. Thus, according to the present embodiment, technology to support operation at a steelworks can be improved.

There are a wide variety of operation conditions that affect the total cost or the like of the blast furnace sector and the energy sector. For example, in the blast furnace, reducing agent conditions, such as coke rate or pulverized coal rate, which are closely related to B gas generation conditions, and blast conditions, such as blast moisture, blast temperature, and blast oxygen concentration, also significantly affect the total cost and carbon dioxide emissions. According to the present embodiment, the reducing agent conditions and the blast conditions are considered as variables, therefore allowing for more accurate cost control and preparation of more feasible operation plans.

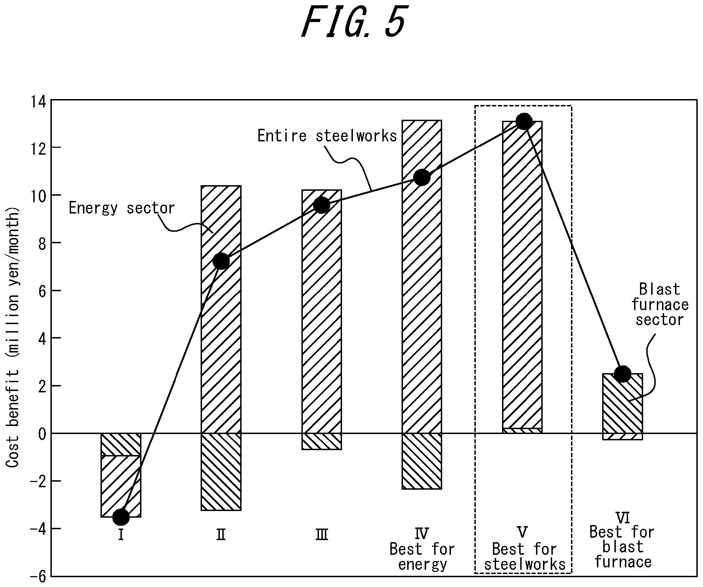

FIG. 5 illustrates case study results of pilot operation based on six different patterns of operation data under certain identical preconditions. Blast furnace operational specifications for the six cases are all set to thermally equivalent conditions, and they are set up in the form of combinations of changes in several specifications equivalent to a coke rate of 2 kg/t. In the case study results of FIG. 5, cost benefits of the blast furnace sector and the energy sector are presented by respective bar graphs. Additionally, a cost benefit is a value obtained by multiplying the cost by -1. A total cost benefit, which is obtained by adding up the cost benefits of the blast furnace sector and the energy sector, is also presented by the line graph. The total cost benefit is the sum of the cost benefit of the blast furnace sector and that of the energy sector. As illustrated in FIG. 5, the cost benefit for the blast furnace sector is maximum in case VI, and the cost benefit for the energy sector is maximum in case IV. On the other hand, the total cost benefit is maximum in case V. In this way, the case with the maximum cost benefit for the blast furnace sector, the case with the maximum cost benefit for the energy sector, and the case with the maximum total cost benefit do not necessarily coincide with each other. That is, it is necessary to determine blast furnace specifications based on the total cost, not only the individual costs of the blast furnace sector and the energy sector. Estimating the total cost with the operation support device 10 according to the present embodiment enables the entire steelworks to be optimized.

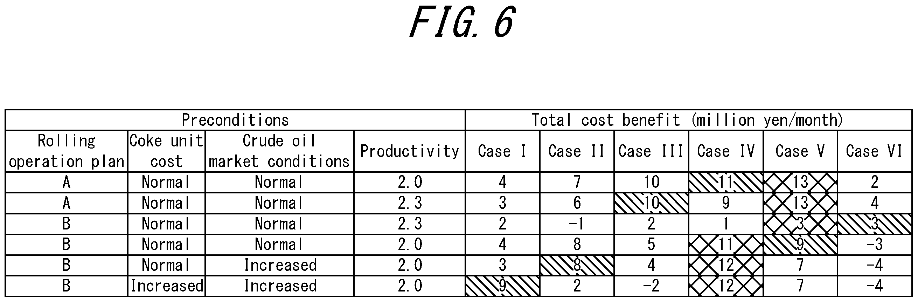

FIG. 6 illustrates case study results of pilot operation under different preconditions. Blast furnace operational specifications for the six cases in FIG. 6 are all set to thermally equivalent conditions, and they are set up in the form of combinations of changes in several specifications equivalent to a coke rate of 2 kg/t. Rolling operation plans A and B respectively indicate a case in which all main mills are operated and a case in which not all main mills are operated. For each of the coke unit cost column and the crude oil market conditions column, a range of normal unit cost and a range of increased unit cost are set as appropriate. Additionally, in FIG. 6, cells with the first and the second highest total cost benefit are highlighted. As illustrated in FIG. 6, it can be seen that the case with the maximum cost benefit is different for all six types of preconditions. In other words, when the preconditions change, the total cost of the blast furnace sector and the energy sector needs to be reevaluated. According to the operation support device 10 of the present embodiment, the total cost can be easily estimated, and recalculation for optimization of the entire steelworks can be performed in a timely manner even when changes in preconditions occur.

Additionally, although the plurality of pieces of candidate operation data in Step S240 are described as top 20 pieces of operation data based on the total costs, the present disclosure is not limited this. The total costs pertaining to the plurality of pieces of candidate operation data may be operation data that satisfy a predetermined criterion. For example, the predetermined criterion may be a ranking-based criterion, or that the total costs may be lower than a predetermined threshold. The predetermined threshold may be a fixed value, or it may be determined based on an average value or the like of total costs corresponding to inputs searched by grid search.

Additionally, the plurality of pieces of candidate operation data may be operation data that satisfy predetermined constraints. In other words, operational or facility management constraints may be set for each of the blast furnace sector and the energy sector, and when some pieces of the candidate operation data conflict with the constraints, they may be excluded when ranking. Such constraints include tuyere-outlet temperature, blast volume, and the like. In an example, the lower limit value and the upper limit value of the tuyere-outlet temperature can respectively be specified as 2250 °C and 2320 °C. In another example, the lower limit value and the upper limit value of the blast volume can respectively be specified as 6500 $Nm^3$/min and 7400 $Nm^3$/min. The constraints may also include minimum heavy oil usage amount at a power generation line. The plurality of pieces of candidate operation data may only be data that satisfy these constraints.

Additionally, the controller 11 may highlight and output some pieces of candidate operation data in the plurality of pieces of candidate operation data output through the output unit 15 that are identical or similar to operation conditions of track record data. In this way, a user can more easily select, from among the candidate operation data, some pieces of operation data that can be realistically used.

Additionally, although an example in which the learning model outputs a total cost, a total cost and carbon dioxide emissions, or a total cost including carbon evaluation is described in the present embodiment, the present disclosure is not limited to this. The learning model may output carbon dioxide emissions. In other words, the operation support device 10 may estimate and output only the carbon dioxide emissions, without estimating the total cost. In this case, in Step S130 of the operation example 1 described above, the controller 11 estimates the carbon dioxide emissions of the blast furnace sector and the energy sector by the learning model, based on the input data on blast furnace operational specifications. Then, in Step S140, the controller outputs the estimated carbon dioxide emissions through the output unit 15. Alternatively, in Step S230 of the operation example 2 described above, the controller 11 estimates the carbon dioxide emissions of the blast furnace sector and the energy sector that correspond to the respective inputs by the learning model. Then, in Step S240, the controller 11 outputs a plurality of pieces of candidate operation data, based on the estimated carbon dioxide emissions through the output unit 15. In other words, in this case, the controller 11 outputs the plurality of pieces of candidate operation data by searching for carbon dioxide emissions as objective functions.

Additionally, although in the present embodiment an example in which the operation support device 10 includes the output unit 15 and a result calculated by the controller 11 of the operation support device 10 is output through the output unit 15 is described, the present disclosure is not limited to this. For example, technology according to the present embodiment may be implemented in a Software as a Service (SaaS) format. In this case, the operation support device 10 functions as a cloud server. The operation support device 10 causes a calculation result to be output by another display device different from the operation support device 10. Such a display device includes a communication unit, receives a calculation result from the operation support device 10 via the communication unit, and displays information, such as a total cost. In other words, the display device displays the total cost of the blast furnace sector and the energy sector that has been estimated by the controller 11 included in the operation support device 10 using a learning model pertaining to a steelworks based on data on blast furnace operational specifications that affect the energy sector. Alternatively, the display device displays the carbon dioxide emissions of the blast furnace sector and the energy sector that have been estimated by the controller 11 included in the operation support device 10 using a learning model pertaining to a steelworks, based on data on blast furnace operational specifications that affect the energy sector. Any method can be employed to request for the calculation result from the operation support device 10. For example, the display device may include an input unit that accepts an input from a user, and based on the content of the input received by the input unit, it may transmit a request for the calculation result to the operation support device 10.

Additionally, the operation support device 10 is a device configured to output blast furnace operational specifications so as to optimize the total cost and carbon dioxide emissions of the blast furnace sector and the energy sector combined, and the present embodiment is designed for a blast furnace operator to consider and implement changes to the blast furnace operational specifications accordingly. The present embodiment is therefore different from those that are designed to optimize supply and demand of gas, steam, electricity, or the like only within a specific sector, such as the energy sector.

Although the present disclosure has been described based on the drawings and examples, it is to be noted that various modifications and changes may be easily made by those skilled in the art based on the present disclosure. Accordingly, such modifications and changes are included within the scope of the present disclosure. For example, functions or the like included in each means, each step, or the like can be rearranged without logical inconsistency, and a plurality of means, steps, or the like can be combined into one or divided.

REFERENCE SIGNS LIST

10      Operation support device
11      Controller
12      Memory
13      Communication unit
14      Input unit
15      Output unit
100     Blast furnace sector model
110     Blast furnace operation model
120     Hot air oven model

200 Energy sector model
210 Utility balance logic

## Claims

1. An operation support method that is used at a steelworks including a blast furnace sector and an energy sector and that is to be executed by an information processing device, the operation support method comprising:

    inputting data on blast furnace operational specifications that affect the energy sector into a learning model pertaining to the steelworks;
    estimating a total cost of the blast furnace sector and the energy sector by the learning model, based on the input data on blast furnace operational specifications; and
    outputting the estimated total cost, wherein
    the learning model is a model trained based on track record data including track records of blast furnace operational specifications and total costs.

2. The operation support method according to claim 1, the operation support method further comprising:

    estimating carbon dioxide emissions of the blast furnace sector and the energy sector by the learning model, based on the input data on blast furnace operational specifications; and
    outputting the estimated carbon dioxide emissions.

3. The operation support method according to claim 1 or 2, wherein the total cost includes a cost equivalent to carbon dioxide emissions.

4. The operation support method according to any one of claims 1 to 3, wherein the blast furnace operational specifications that affect the energy sector include reducing agent specifications and blast specifications.

5. The operation support method according to claim 4, wherein

    the reducing agent specifications include coke rate and pulverized coal rate, and
    the blast specifications include blast moisture, blast temperature, and blast oxygen concentration.

6. The operation support method according to claim 5, wherein the reducing agent specifications include composition and carbon content pertaining to coke.

7. The operation support method according to any of claims 1 to 5, wherein

    data on a predetermined range of blast furnace operational specifications are input into the learning model, and
    total costs of the blast furnace sector and the energy sector corresponding to respective inputs are estimated, and
    a plurality of pieces of candidate operation data are output, based on the estimated total costs of the energy sector.

8. The operation support method according to claim 7, wherein the total costs pertaining to the plurality of pieces of candidate operation data satisfy a predetermined criterion.

9. The operation support method according to claim 7 or 8, wherein the plurality of pieces of candidate operation data satisfy predetermined constraints.

10. An operation support device at a steelworks including a blast furnace sector and an energy sector that comprises a controller, wherein
    the controller is configured to:

    input data on blast furnace operational specifications that affect the energy sector into a learning model pertaining to the steelworks;
    estimate a total cost of the blast furnace sector and the energy sector by the learning model, based on the input data on blast furnace operational specifications; and
    output the estimated total cost, wherein

the learning model is a model trained using track record data including track records of blast furnace operational specifications and total costs as teacher data.

**11.** A display device at a steelworks including a blast furnace sector and an energy sector that displays an output from an operation support device including a controller, the display device being configured to

display a total cost of the blast furnace sector and the energy sector that has been estimated by the controller included in the operation support device by a learning model pertaining to the steelworks, based on data on blast furnace operational specifications that affect the energy sector, wherein
the learning model is a model trained using track record data including track records of blast furnace operational specifications and total costs as teacher data.

**12.** An operation support program at a steelworks including a blast furnace sector and an energy sector that is to be executed by an information processing device, the operation support program being configured to cause a computer to:

input data on blast furnace operational specifications that affect the energy sector into a learning model pertaining to the steelworks;
estimate a total cost of the blast furnace sector and the energy sector by the learning model, based on the input data on blast furnace operational specifications; and
output the estimated total cost, wherein
the learning model is a model trained using track record data including track records of blast furnace operational specifications and total costs as teacher data.

# FIG. 1

10

Operation support device

| Controller | ~11 |

| Memory | ~12 |

| Communication unit | ~13 |

| Input unit | ~14 |

| Output unit | ~15 |

# FIG. 2

```
        ┌─────────┐
        │  Start  │
        └─────────┘
             │
             ▼
┌──────────────────────────────────────────┐
│ Train learning model based on track record data │  S100
└──────────────────────────────────────────┘
             │
             ▼
┌──────────────────────────────────────────┐
│      Determine blast furnace operational      │  S110
│    specifications based on preconditions     │
└──────────────────────────────────────────┘
             │
             ▼
┌──────────────────────────────────────────┐
│       Input data on blast furnace operational    │  S120
│        specifications into learning model        │
└──────────────────────────────────────────┘
             │
             ▼
┌──────────────────────────────────────────┐
│            Estimate total cost of             │  S130
│    blast furnace sector and energy sector     │
└──────────────────────────────────────────┘
             │
             ▼
┌──────────────────────────────────────────┐
│          Output estimated total cost          │  S140
└──────────────────────────────────────────┘
             │
             ▼
        ┌─────────┐
        │   End   │
        └─────────┘
```

# FIG. 3

Precondition (1) Production plan → Blast furnace operational specifications

100 Blast furnace sector model

110 Blast furnace operation model | Hot air oven model 120

Amount of B gas generated or like

⇩ ← Precondition (2) Rolling operation plan

210 Utility balance logic

⇩ ← Precondition (3) Coal market conditions
Precondition (4) Crude oil market conditions

200 Energy sector model

Total cost, carbon dioxide emissions

# FIG. 4

```
        ┌─────────────┐
        │    Start    │
        └─────────────┘
               │
               ▼
┌─────────────────────────────────────────────────┐
│  Determine base conditions based on preconditions │  ~S210
└─────────────────────────────────────────────────┘
               │
               ▼
┌─────────────────────────────────────────────────┐
│   Input data on predetermined range of blast furnace │  ~S220
│    operational specifications into learning model │
└─────────────────────────────────────────────────┘
               │
               ▼
┌─────────────────────────────────────────────────┐
│   Estimate total costs of blast furnace sector and │  ~S230
│   energy sector corresponding to respective inputs │
└─────────────────────────────────────────────────┘
               │
               ▼
┌─────────────────────────────────────────────────┐
│   Output plurality of pieces of candidate operation data │  ~S240
└─────────────────────────────────────────────────┘
               │
               ▼
        ┌─────────────┐
        │     End     │
        └─────────────┘
```

FIG. 5

EP 4 462 213 A1

# FIG. 6

| Preconditions | | | | Total cost benefit (million yen/month) | | | | | |
|---|---|---|---|---|---|---|---|---|---|
| Rolling operation plan | Coke unit cost | Crude oil market conditions | Productivity | Case I | Case II | Case III | Case IV | Case V | Case VI |
| A | Normal | Normal | 2.0 | 4 | 7 | 10 | 11 | 13 | 2 |
| A | Normal | Normal | 2.3 | 3 | 6 | 10 | 9 | 13 | 4 |
| B | Normal | Normal | 2.3 | 2 | -1 | 2 | 1 | 3 | 3 |
| B | Normal | Normal | 2.0 | 4 | 8 | 5 | 11 | 9 | -3 |
| B | Normal | Increased | 2.0 | 3 | 8 | 4 | 12 | 7 | -4 |
| B | Increased | Increased | 2.0 | 9 | 2 | -2 | 12 | 7 | -4 |

EP 4 462 213 A1

## INTERNATIONAL SEARCH REPORT

| International application No. |
|---|
| **PCT/JP2023/012039** |

**A.    CLASSIFICATION OF SUBJECT MATTER**

*G05B 23/02*(2006.01)i; *C21B 5/00*(2006.01)i
FI:    G05B23/02 T; C21B5/00

According to International Patent Classification (IPC) or to both national classification and IPC

**B.    FIELDS SEARCHED**

Minimum documentation searched (classification system followed by classification symbols)

G05B23/02; C21B5/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2015-530652 A (GENERAL ELECTRIC COMPANY) 15 October 2015 (2015-10-15) paragraphs [0012]-[0046], fig. 1-5 | 1-12 |
| Y | WO 2015/093262 A1 (JFE STEEL CORPORATION) 25 June 2015 (2015-06-25) paragraphs [0019]-[0022] | 1-12 |
| Y | JP 2013-246560 A (NIPPON STEEL & SUMITOMO METAL CORP) 09 December 2013 (2013-12-09) paragraphs [0031]-[0035], [0055] | 2 |
| Y | JP 2021-174114 A (NABTESCO CORP) 01 November 2021 (2021-11-01) paragraph [0038] | 8-9 |
| Y | JP 2007-65883 A (TOSHIBA CORP) 15 March 2007 (2007-03-15) paragraph [0083] | 9 |
| A | JP 2020-15960 A (NIPPON STEEL CORP) 30 January 2020 (2020-01-30) entire text, all drawings | 1-12 |

| ✓ Further documents are listed in the continuation of Box C. | ✓ See patent family annex. |
|---|---|

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **18 May 2023** | **06 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/012039**

| C. | DOCUMENTS CONSIDERED TO BE RELEVANT | |
|---|---|---|
| Category* | Citation of document, with indication, where appropriate, of the relevant passages | Relevant to claim No. |
| A | JP 2004-35986 A (SUMITOMO METAL IND LTD) 05 February 2004 (2004-02-05)<br>entire text, all drawings | 1-12 |

Form PCT/ISA/210 (second sheet) (January 2015)

**INTERNATIONAL SEARCH REPORT**
**Information on patent family members**

International application No.

**PCT/JP2023/012039**

| Patent document cited in search report | | | Publication date (day/month/year) | Patent family member(s) | | | Publication date (day/month/year) |
|---|---|---|---|---|---|---|---|
| JP | 2015-530652 | A | 15 October 2015 | US 2014/0058534 A1 paragraphs [0015]-[0051], fig. 1-5 EP 2888637 B1 WO 2014/031264 A2 | | | |
| WO | 2015/093262 | A1 | 25 June 2015 | CN 105814504 A KR 10-2016-0086913 A1 JP 5862839 B2 | | | |
| JP | 2013-246560 | A | 09 December 2013 | (Family: none) | | | |
| JP | 2021-174114 | A | 01 November 2021 | EP 3901457 A1 paragraph [0038] CN 113530762 A | | | |
| JP | 2007-65883 | A | 15 March 2007 | (Family: none) | | | |
| JP | 2020-15960 | A | 30 January 2020 | (Family: none) | | | |
| JP | 2004-35986 | A | 05 February 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022052019 A

- JP 2005055997 A